# EUROPÄISCHE PATENTSCHRIFT

(11) **EP 3 369 840 B1**
(45) Veröffentlichungstag und Bekanntmachung des Hinweises auf die Patenterteilung: **27.11.2019**
(21) Anmeldenummer: 18158896.3
(22) Anmeldetag: 27.02.2018
(51) Int. Cl.: C23C 4/08, C23C 4/18, C23C 4/131, C23C 4/134, F02F 1/00, F16J 10/04

(54) **BRENNKRAFTMASCHINE, VERFAHREN ZUM HERSTELLEN EINES KURBELGEHÄUSES UND/ODER EINER ZYLINDERLAUFBUCHSE FÜR EINE BRENNKRAFTMASCHINE, UND VERWENDUNG EINER STAHLLEGIERUNG ALS BESCHICHTUNGSMATERIAL FÜR EINE ZYLINDERLAUFBAHN ODER EINE ZYLINDERLAUFBUCHSE**
COMBUSTION ENGINE, METHOD FOR PRODUCING A CRANKCASE AND/OR A CYLINDER LINER FOR A COMBUSTION ENGINE, AND AND USE OF A STEEL ALLOY AS COATING MATERIAL FOR A CYLINDER LINER
MOTEUR À COMBUSTION, PROCÉDÉ DE FABRICATION D'UN CARTER ET/OU D'UNE CHEMISE DE CYLINDRE POUR UN MOTEUR À COMBUSTION ET ET UTILISATION D'UN ALLIAGE D'ACIER EN TANT QUE MATÉRIAU DE REVÊTEMENT POUR UNE CHEMISE DE CYLINDRE

(30) Priorität: 04.03.2017 DE 102017002078
(43) Veröffentlichungstag der Anmeldung: 05.09.2018
(73) Patentinhaber: MAN Truck & Bus SE, 80995 München (DE)
(72) Erfinder: Scharf, Peter, 90449 Nürnberg (DE)
(74) Vertreter: v. Bezold & Partner Patentanwälte - PartG mbB

(56) Entgegenhaltungen:
- EP-A2- 2 664 684
- US-A- 4 822 415
- US-A1- 2012 090 462
- US-A1- 2015 218 687

## Beschreibung

Die Erfindung betrifft eine Brennkraftmaschine, insbesondere eine Hubkolben-Brennkraftmaschine, nach dem Oberbegriff des Patentanspruchs 1 sowie ein Verfahren zum Herstellen eines Kurbelgehäuses oder einer Zylinderlaufbuchse für eine Brennkraftmaschine nach dem Oberbegriff des Patentanspruchs 3 und die Verwendung der Stähle 1.4542 oder 1.4548 als Beschichtungsmaterial für die Beschichtung einer Zylinderlaufbahn eines Kurbelgehäuses oder einer Zylinderlaufbuchse nach dem Oberbegriff des Anspruchs 8.

Ein wesentliches Ziel bei der Entwicklung von Verbrennungsmotoren ist es, die Zylinderlaufbahnen der Motoren möglichst verschleißfest und korrosionsbeständig auszuführen. Eine hohe Verschleißfestigkeit der Zylinderlaufbahnen ist dabei wichtig, um eine hohe Lebensdauer des Verbrennungsmotors gewährleisten zu können. Eine hohe Korrosionsbeständigkeit der Zylinderlaufbahnen ist beispielsweise deshalb erforderlich, da es nach wie vor sogenannte Schlechtkraftstoff-Länder gibt, in denen in erster Linie nur Kraftstoffe mit einem relativ hohen Schwefelgehalt verfügbar sind. Bei der Verbrennung eines derartigen Kraftstoffs entstehen schwefelsaure Kondensate, die zu einem sogenannten korrosiven Verschleiß der Zylinderlaufbahnen führen können. Des Weiteren werden auch bei Verbrennungsmotoren mit einer Abgasrückführung vermehrt korrosive Kondensate gebildet.

In der US 2012/0090462 A1 wird eine Herstellung von Kolben und Zylinderrohren im Schmelzgussverfahren aus Stahl mit hohem Siliziumanteil und geringem Kupferanteil bis zu 2,0 Gew.% sowie anschließender Oberflächenhärtung durch Nitrierung vorgeschlagen.

In der EP 2 664 684 A2 wird ein Chromstahl mit einem niedrigen Kupfer- und Nickelanteil von 0,01 bis 0,4 bw. 0,5 Gew.% und einem relativ hohen Kohlenstoffanteil von 0,1 bis 0,3 Gew.%, welcher gute Ölbenetzbarkeit bewirken soll aber gleichzeitig zu einer Beeinträchtigung der Korrosionsbeständigkeit führen kann, zum Beschichten metallischer Substrate vorgeschlagen.

Aus der DE 10 2015 207 833 A1 ist ein Zylinderkurbelgehäuse für einen Verbrennungsmotor bekannt, bei dem wenigstens eine Zylinderlaufbahn aus einem Werkstoff gebildet ist, der Chrom, Molybdän, Kohlenstoff und Keramik aufweist. Durch den Chrom- und Keramikgehalt in der Beschichtung der Zylinderlaufbahn soll einem korrosiven Angriff durch die bei der Kraftstoffverbrennung im Zylinder eventuell entstehenden Säuren, insbesondere Schwefelsäure, entgegengewirkt werden.

Bei der Verwendung eines Keramikpartikel aufweisenden Beschichtungsmaterials für die Beschichtung einer Zylinderlaufbahn ist es jedoch von Nachteil, dass eine nach der Beschichtung folgende Honung der Zylinderlaufbahn aufgrund der abrasiv wirkenden Keramikpartikel deutlich erschwert wird.

Aufgabe der Erfindung ist es daher, eine Brennkraftmaschine, insbesondere eine Hubkolben-Brennkraftmaschine, sowie ein Verfahren zum Herstellen eines Kurbelgehäuses oder einer Zylinderlaufbuchse für eine Brennkraftmaschine bereitzustellen, bei denen die wenigstens eine Zylinderlaufbahn mit einem Beschichtungsmaterial beschichtet ist bzw. wird, das besonders verschleißfest, korrosionsbeständig und gleichzeitig auch einfach bearbeitbar bzw. honbar sowie kostengünstig ist.

Die Aufgabe wird gelöst mit den Merkmalen der unabhängigen Patentansprüche. Bevorzugte Weiterbildungen sind in den Unteransprüchen offenbart.

Gemäß Patentanspruch 1 wird eine Brennkraftmaschine, insbesondere eine Hubkolben-Brennkraftmaschine, vorgeschlagen, mit wenigstens einem Zylinder, wobei eine Zylinderwand des Zylinders zumindest an einem, eine Zylinderlaufbahn bildenden Wandbereich durch eine Beschichtung eines Kurbelgehäuses oder einer Zylinderlaufbuchse der Brennkraftmaschine mittels eines Beschichtungsmaterials gebildet ist. Erfindungsgemäß ist das Beschichtungsmaterial durch eine hochlegierte Stahllegierung gebildet, die als Legierungselemente wenigstens Chrom, Nickel, Kupfer und Niob aufweist.

Wie sich in Versuchen überraschenderweise herausgestellt hat, weist eine Zylinderlaufbahn mit einer derartigen Beschichtung bzw. Gleitschicht ein sehr gutes tribologisches Verhalten (Reibungs- und Verschleißeigenschaften) sowie auch eine hervorragende Korrosionsbeständigkeit im Hinblick auf die bei der Kraftstoffverbrennung entstehenden korrosiven Kondensate auf. Dabei weist diese Stahllegierungs-Beschichtung in der vorliegenden Anwendung auch keine Verschmierungsneigung auf, wie dies bei anderen Stahllegierungen häufig der Fall ist. Des Weiteren kann eine durch dieses Beschichtungsmaterial gebildete Oberfläche auch besonders einfach bzw. mit geringem Aufwand bearbeitet bzw. gehont werden, da dieses Beschichtungsmaterial keine abrasiv wirkenden Keramikpartikel aufweist. Zudem ist das erfindungsgemäße Beschichtungsmaterial auch kostengünstig, da Stahllegierungen mit derartigen Legierungselementen handelsüblich sind.

In der konkreten erfinderischen Ausgestaltung ist die erfindungsgemäße Stahllegierung durch den Stahl 1.4542 (DIN EN 10088-3) bzw. X5CrNiCuNb16-4 oder durch den Stahl 1.4548 (DIN EN 10088-3) bzw. X5CrNiCuNb17-4-4 gebildet. Hierbei handelt es sich um handelsübliche, üblicherweise für die Luft- und Raumfahrt verwendete Stähle.

Des Weiteren wird auch ein Fahrzeug, insbesondere ein Nutzfahrzeug, mit der erfindungsgemäßen Brennkraftmaschine beansprucht.

Die sich durch das erfindungsgemäße Fahrzeug ergebenden Vorteile sind identisch mit den bereits gewürdigten Vorteilen der erfindungsgemäßen Brennkraftmaschine, so dass diese an dieser Stelle nicht wiederholt werden.

Die Anmelderin behält es sich zudem vor, Ansprüche zu formulieren, die auf ein Zylinderkurbelgehäuse oder auf eine Zylinderlaufbuchse mit der erfindungsgemäßen Beschichtung gerichtet sind.

Zur Lösung der bereits genannten Aufgabe wird ferner auch ein Verfahren zum Herstellen eines Kurbelgehäuses oder einer Zylinderlaufbuchse für eine Brennkraftmaschine vorgeschlagen, wobei mittels einer Beschichtungseinrichtung ein Beschichtungsmaterial auf eine Zylinderwand des Kurbelgehäuses oder der Zylinderlaufbuchse aufgebracht wird. Erfindungsgemäß wird eine hochlegierte Stahllegierung, die als Legierungselemente wenigstens Chrom, Nickel, Kupfer und Niob aufweist, als Beschichtungsmaterial auf die Zylinderwand aufgebracht, wobei die Stahllegierung durch den Stahl 1.4542 (DIN EN 10088-3) oder durch den Stahl 1.4548 (DIN EN 10088-3) gebildet ist.

Die sich durch die erfindungsgemäße Verfahrensführung ergebenden Vorteile sind ebenfalls identisch mit den bereits gewürdigten Vorteilen der erfindungsgemäßen Brennkraftmaschine und werden an dieser Stelle ebenfalls nicht wiederholt.

In einer bevorzugten erfindungsgemäßen Verfahrensführung wird das Beschichtungsmaterial mittels eines thermischen Spritzverfahrens aufgetragen, wobei die Beschichtungseinrichtung durch eine Heiz- und Spritzeinrichtung, insbesondere durch einen Plasmabrenner, gebildet ist, mittels dem das Beschichtungsmaterial erhitzt und dadurch aufgeschmolzen und das aufgeschmolzene Beschichtungsmaterial auf die Zylinderwand des Kurbelgehäuses oder der Zylinderlaufbuchse aufgespritzt wird. So kann das erfindungsgemäße Beschichtungsmaterial einfach und effektiv in der erforderlichen Qualität auf die Zylinderwand aufgebracht werden. In einer bevorzugten konkreten Ausgestaltung ist das thermische Spritzverfahren durch atmosphärisches Plasmaspritzen (APS) gebildet, wobei der Spritzwerkstoff bzw. das Beschichtungsmaterial mittels einer Zuführeinrichtung im Pulverform hin zu einem Heizbereich der Heiz- und Spritzeinrichtung gefördert wird, insbesondere in den Plasmajet einer als Plasmabrenner ausgebildeten Heiz- und Spritzeinrichtung eingedüst wird. So kann das erfindungsgemäße Beschichtungsmaterial einfach und effektiv auf die Zylinderwand aufgebracht werden.

Alternativ kann das thermische Spritzverfahren auch durch Lichtbogendrahtspritzen (LDS) gebildet sein, wobei der Spritzwerkstoff mittels einer Zuführeinrichtung in Drahtform hin zu einem Heizbereich der Heiz- und Spritzeinrichtung gefördert wird. Auf diese Weise kann das erfindungsgemäße Beschichtungsmaterial besonders einfach bzw. mit besonders geringem Aufwand auf die Zylinderwand aufgebracht werden.

Weiter bevorzugt wird nach dem Auftragen des Beschichtungsmaterials auf die Zylinderwand eine durch das Beschichtungsmaterial gebildete Oberfläche mittels einer, ein Hohnwerkzeug, insbesondere eine Honahle, aufweisenden, Honeinrichtung bearbeitet. Durch diese Nachbearbeitung mittels der Honeinrichtung werden die tribologischen Eigenschaften der durch das erfindungsgemäße Beschichtungsmaterial gebildeten Gleitschicht des Kurbelgehäuses bzw. der Zylinderlaufbuchse deutlich verbessert, wodurch einem Verschleiß der Zylinderlaufbahn und eines in dem Zylinder geführten Kolbens effektiv entgegengewirkt wird.

Des Weiteren wird auch die Verwendung einer hochlegierten Stahllegierung, die als Legierungselemente wenigstens Chrom, Nickel, Kupfer und Niob aufweist, als Beschichtungsmaterial für die Beschichtung einer Zylinderlaufbahn eines Kurbelgehäuses oder einer Zylinderlaufbuchse beansprucht, wobei die Stahllegierung durch den Stahl 1.4542 (DIN EN 10088-3) oder durch den Stahl 1.4548 (DIN EN 10088-3) gebildet ist.

Die sich durch die erfindungsgemäße Verwendung ergebenden Vorteile sind ebenfalls identisch mit den bereits gewürdigten Vorteilen der erfindungsgemäßen Brennkraftmaschine, so dass diese an dieser Stelle ebenfalls nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: einen Schnitt durch ein Kurbelgehäuse einer erfindungsgemäßen Brennkraftmaschine;
- Figur 2: eine schematische Darstellung, anhand der die erfindungsgemäße Verfahrensführung erläutert wird; und
- Figur 3: einen Schnitt durch eine zweite Ausführungsform einer erfindungsgemäßen Brennkraftmaschine.

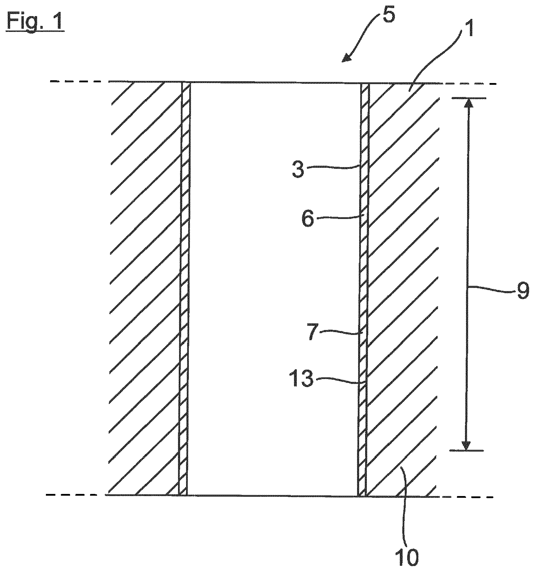

In Figur 1 ist ein Teilschnitt durch ein Kurbelgehäuse 1 einer erfindungsgemäßen Brennkraftmaschine gezeigt. Eine Zylinderwand 3 des hier gezeigten Zylinders 5 ist hierbei vollständig bzw. durchgehend durch ein, eine Gleitschicht 6 bildendes, Beschichtungsmaterial 7 gebildet. Alternativ wäre es aber auch denkbar, dass die Zylinderwand 3 nur an einem Zylinderlaufbahn-Abschnitt 9 des Zylinders 5 oder an einem Teil des Zylinderlaufbahn-Abschnitts 9 mittels des Beschichtungsmaterials 7 beschichtet ist.

Das Beschichtungsmaterial 7 ist durch eine Stahllegierung gebildet, die als Legierungselemente Chrom, Nickel, Kupfer und Niob aufweist. Dieses Beschichtungsmaterial 7 ist besonders verschleißfest, korrosionsbeständig sowie auch einfach bearbeitbar. Konkret ist die Stahllegierung durch den Stahl 1.4542 (DIN EN 10088-3) oder durch den Stahl 1.4548 (DIN EN 10088-3) gebildet.

Die Gleitschicht 6 ist hier weiter unmittelbar bzw. direkt auf ein, beispielsweise durch Aluminium gebildetes, Grundmaterial 10 des Kurbelgehäuses 1 aufgebracht. Alternativ könnte zwischen der Gleitschicht 6 und dem Grundmaterial 10 des Kurbelgehäuses 1 auch wenigstens eine Stützschicht bzw. Stabilisierungsschicht vorgesehen sein, mittels der einem Brechen der Gleitschicht 6 durch eine eventuelle plastische Verformung des Grundmaterials 10 entgegengewirkt wird.

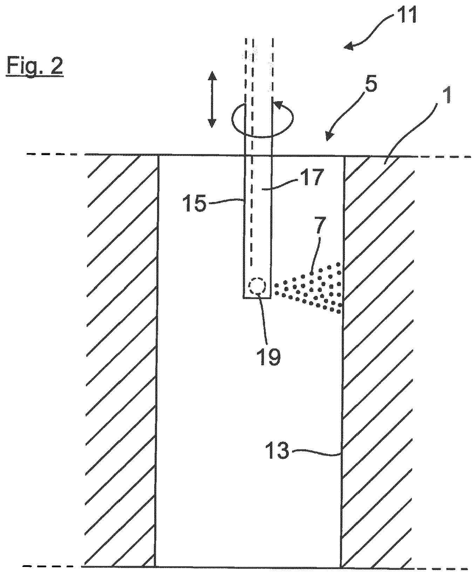

Eine erfindungsgemäße Verfahrensführung zur Herstellung des Kurbelgehäuses 1 wird nachfolgend anhand von Fig. 2 näher erläutert:
In Fig. 2 ist schematisch ein Teil einer Beschichtungseinrichtung 11 gezeigt, mittels der eine Zylinderwand 13 des Kurbelgehäuses 1 mit dem Beschichtungsmaterial 7 beschichtet werden kann. Das Beschichtungsmaterial 7 wird dabei mittels eines thermischen Spritzverfahrens, hier beispielhaft durch atmosphärisches Plasmaspritzen (APS), auf die unbeschichtete Zylinderwand 13 des Kurbelgehäuses 1 aufgebracht.

Konkret wird das Beschichtungsmaterial 7 hier in Pulverform über eine Zuführleitung 15 eines Plasmabrenners 17 der Beschichtungseinrichtung 11 hin zu einem Heizbereich 19 des Plasmabrenners 17 gefördert bzw. in den Plasmajet des Plasmabrenners 11 eingedüst. Das Beschichtungsmaterial-Pulver wird durch die hohe Temperatur des Plasmas aufgeheizt und dadurch aufgeschmolzen. Der Plasmajet bzw. der Plasmastrom reißt die aufgeschmolzenen Pulverteilchen mit und schleudert bzw. spritzt sie auf die zu beschichtende Zylinderwand 13 des Kurbelgehäuses 1.

Der Plasmabrenner 17 bildet hier somit eine Heiz- und Spritzeinrichtung aus, mittels der das Beschichtungsmaterial 7 aufgeschmolzen und im aufgeschmolzenen Zustand auf die Zylinderwand 13 des Kurbelgehäuses 1 aufgespritzt werden kann. Alternativ zu dem atmosphärischen Plasmaspritzen könnte das Beschichtungsmaterial 7 beispielsweise auch durch Lichtbogendrahtspritzen (LDS) auf die Zylinderwand 13 aufgebracht werden.

Nach dem Auftragen des Beschichtungsmaterials 7 auf die Zylinderwand 13 wird eine durch das Beschichtungsmaterial gebildete Oberfläche mittels einer in den Figuren nicht gezeigten Honeinrichtung bearbeitet bzw. gehont. Auf diese Weise werden die tribologischen Eigenschaften der durch das Beschichtungsmaterial 7 gebildeten Gleitschicht 6 des Kurbelgehäuses 1 optimiert.

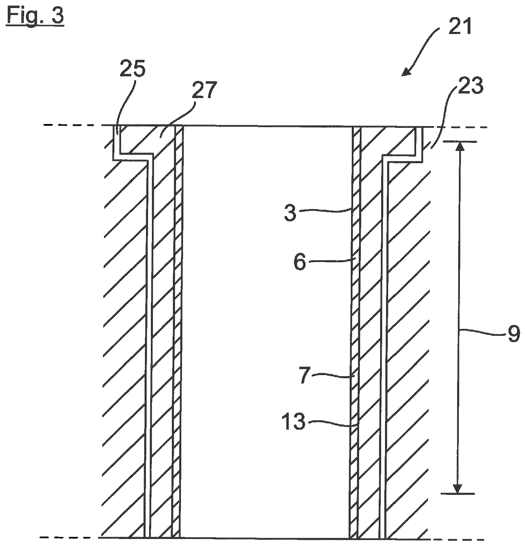

In Figur 3 ist ein Teilschnitt durch eine zweite Ausführungsform einer erfindungsgemäßen Brennkraftmaschine 21 gezeigt. Dabei bildet hier nicht ein Kurbelgehäuse 23 der Brennkraftmaschine 21, sondern eine in eine Buchsen-Ausnehmung 25 des Kurbelgehäuses 23 eingesetzte Zylinderlaufbuchse 27 der Brennkraftmaschine 21 eine Zylinderlaufbahn der Brennkraftmaschine 21 aus. Die Gleitschicht 6 aus dem Beschichtungsmaterial 7 ist hier daher nicht auf das Kurbelgehäuse 23, sondern auf die Zylinderlaufbuchse 27 der Brennkraftmaschine 21 aufgebracht.

### Bezugszeichenliste

- 1: Kurbelgehäuse
- 3: Zylinderwand
- 5: Zylinder
- 6: Gleitschicht
- 7: Beschichtungsmaterial
- 9: Zylinderlaufbahn
- 10: Grundmaterial
- 11: Beschichtungseinrichtung
- 13: unbeschichtete Zylinderwand
- 15: Zuführleitung
- 17: Plasmabrenner
- 19: Heizbereich
- 21: Brennkraftmaschine
- 23: Zylinderkurbelgehäuse
- 25: Buchsen-Ausnehmung
- 27: Zylinderlaufbuchse

## Patentansprüche

1. Brennkraftmaschine, insbesondere Hubkolben-Brennkraftmaschine, mit wenigstens einem Zylinder (5), wobei eine Zylinderwand (3) des Zylinders (5) zumindest an einem, eine Zylinderlaufbahn bildenden Wandbereich durch eine Beschichtung eines Kurbelgehäuses (1) oder einer Zylinderlaufbuchse (27) der Brennkraftmaschine (21) mittels eines Beschichtungsmaterials (7) gebildet ist, wobei das Beschichtungsmaterial (7) durch eine hochlegierte Stahllegierung gebildet ist, die als Legierungselemente Chrom, Nickel, Kupfer und Niob aufweist, und die Stahllegierung durch den Stahl 1.4542 (DIN EN 10088-3) oder durch den Stahl 1.4548 (DIN EN 10088-3) gebildet ist.

2. Fahrzeug, insbesondere Nutzfahrzeug, mit einer Brennkraftmaschine nach Anspruch 1.

3. Verfahren zum Herstellen eines Kurbelgehäuses (1) oder einer Zylinderlaufbuchse (27) für eine Brennkraftmaschine, wobei mittels einer Beschichtungseinrichtung (11) ein Beschichtungsmaterial (7) auf eine Zylinderwand (13) des Kurbelgehäuses (1) oder der Zylinderlaufbuchse (27) aufgebracht wird, wobei eine hochlegierte Stahllegierung, die als Legierungselemente Chrom, Nickel, Kupfer und Niob aufweist, als Beschichtungsmaterial (7) auf die Zylinderwand (13) aufgebracht wird und die Stahllegierung durch den Stahl 1.4542 (DIN EN 10088-3) oder durch den Stahl 1.4548 (DIN EN 10088-3) gebildet ist.

4. Verfahren nach Anspruch 3, **dadurch gekennzeichnet, dass** das Beschichtungsmaterial (7) mittels eines thermischen Spritzverfahrens aufgebracht wird, wobei die Beschichtungseinrichtung (11) durch eine Heiz- und Spritzeinrichtung (17), insbesondere durch einen Plasmabrenner, gebildet ist, mittels dem das Beschichtungsmaterial (7) erhitzt und dadurch aufgeschmolzen und das aufgeschmolzene Beschichtungsmaterial (7) auf die Zylinderwand (13) des Kurbelgehäuses (1) oder der Zylinderlaufbuchse (27) aufgespritzt wird.

5. Verfahren nach Anspruch 4, **dadurch gekennzeichnet, dass** das thermische Spritzverfahren durch atmosphärisches Plasmaspritzen (APS) gebildet ist, wobei der Spritzwerkstoff (7) mittels einer Zuführeinrichtung (15) in Pulverform hin zu einem Heizbereich (19) der Heiz- und Spritzeinrichtung (17) gefördert wird, insbesondere in den Plasmajet einer als Plasmabrenner ausgebildeten Heiz- und Spritzeinrichtung eingedüst wird.

6. Verfahren nach Anspruch 4, **dadurch gekennzeichnet, dass** das thermische Spritzverfahren durch Lichtbogendrahtspritzen (LDS) gebildet ist, wobei der Spritzwerkstoff (7) mittels einer Zuführeinrichtung in Drahtform hin zu einem Heizbereich (19) der Heiz- und Spritzeinrichtung (17) gefördert wird.

7. Verfahren nach einem der Ansprüche 3 bis 6, **dadurch gekennzeichnet, dass** nach dem Auftragen des Beschichtungsmaterials (7) eine durch das Beschichtungsmaterial (7) gebildete Oberfläche mittels einer, ein Honwerkzeug, insbesondere eine Honahle, aufweisenden Honeinrichtung bearbeitet wird.

8. Verwendung einer hochlegierten Stahllegierung, die als Legierungselemente Chrom, Nickel, Kupfer und Niob aufweist, als Beschichtungsmaterial (7) für die Beschichtung einer Zylinderlaufbahn eines Kurbelgehäuses (5) oder einer Zylinderlaufbuchse (27), wobei vorgesehen ist, dass die Stahllegierung durch den Stahl 1.4542 (DIN EN 10088-3) oder durch den Stahl 1.4548 (DIN EN 10088-3) gebildet ist.

## Claims

1. An internal combustion engine, in particular a reciprocating piston internal combustion engine, having at least one cylinder (5), a cylinder wall (3) of the cylinder (5) being formed at least on a wall region which forms a cylinder bore by way of a coating of a crankcase (1) or a cylinder liner (27) of the internal combustion engine (21) by means of a coating material (7), the coating material (7) being formed by way of a high-alloyed steel alloy which comprises chromium, nickel, copper and niobium as alloying elements, and the steel alloy being formed by way of the steel 1.4542 (DIN EN 10088-3) or by way of the steel 1.4548 (DIN EN 10088-3).

2. A vehicle, in particular a commercial vehicle, having an internal combustion engine according to Claim 1.

3. A method for producing a crankcase (1) or a cylinder liner (27) for an internal combustion engine, a coating material (7) being applied to a cylinder wall (13) of the crankcase (1) or the cylinder liner (27) by means of a coating device (11), a high-alloyed steel alloy which comprises chromium, nickel, copper and niobium as alloying elements being applied to the cylinder wall (13) as coating material, and the steel alloy being formed by way of the steel 1.4542 (DIN EN 10088-3) or by way of the steel 1.4548 (DIN EN 10088-3).

4. The method according to Claim 3, **characterized in that** the coating material (7) is applied by means of a thermal spraying method, the coating device (11) being formed by way of a heating and spraying device (17), in particular by way of a plasma torch, by means of which the coating material (7) is heated and melted as a result, and the melted coating material (7) is sprayed onto the cylinder wall (13) of the crankcase (1) or the cylinder liner (27).

5. The method according to Claim 4, **characterized in that** the thermal spraying method is formed by way of atmospheric plasma spraying (APS), the spraying material (7) being conveyed in powder form by means of a feeding device (15) towards a heating region (19) of the heating and spraying device (17), in particular being injected into the plasma jet of a heating and spraying device which is configured as a plasma torch.

6. The method according to Claim 4, **characterized in that** the thermal spraying method is formed by way of wire arc spraying, the spraying material (7) being conveyed in wire form by means of a feeding device towards a heating region (19) of the heating and spraying device (17) .

7. The method according to one of Claims 3 to 6, **characterized in that**, after the application of the coating material (7), a surface which is formed by way of the coating material (7) is machined by means of a honing device which has a honing tool, in particular a honing mandrel.

8. The use of a high-alloyed steel alloy which comprises chromium, nickel, copper and niobium as alloying elements, as coating material (7) for the coating of a cylinder bore of a crankcase (5) or a cylinder liner (27), it being provided that the steel alloy is formed by way of the steel 1.4542 (DIN EN 10088-3) or by way of the steel 1.4548 (DIN EN 10088-3).

## Revendications

1. Moteur à combustion interne, en particulier à piston alternatif, comprenant au moins un cylindre (5), une paroi (3) du cylindre (5) étant formée par revêtement d'un carter de vilebrequin (1) ou d'une chemise de cylindre (27) du moteur à combustion interne (21) avec un matériau de revêtement (7) au moins au niveau d'une zone de paroi formant une surface de contact, le matériau de revêtement (7) étant formé par un alliage d'acier fortement allié qui comporte comme éléments d'alliage du chrome, du nickel, du cuivre et du niobium, et l'alliage d'acier étant formé par l'acier 1.4542 (DIN EN 10088-3) ou par l'acier 1.4548 (DIN EN 10088-3).

2. Véhicule, en particulier véhicule utilitaire, comprenant un moteur à combustion interne selon la revendication 1.

3. Procédé de fabrication d'un carter de vilebrequin (1) ou d'une chemise de cylindre (27) destinés à un moteur à combustion interne, un matériau de revêtement (7) est appliqué sur une paroi de cylindre (13) du carter de vilebrequin (1) ou de la chemise de cylindre (27) à l'aide d'un dispositif de revêtement (11), le matériau de revêtement (7) formé par un alliage d'acier fortement allié qui comporte comme éléments d'alliage du chrome, du nickel, du cuivre et du niobium, étant appliqué sur la paroi de cylindre (13) et l'alliage d'acier étant formé par l'acier 1.4542 (DIN EN 10088-3) ou par l'acier 1.4548 (DIN EN 10088-3).

4. Procédé selon la revendication 3, **caractérisé en ce que** le matériau de revêtement (7) est appliqué à l'aide d'un procédé de projection thermique, le dispositif de revêtement (11) étant formé par un dispositif de chauffage et de projection (17), en particulier par une torche à plasma, au moyen duquel le matériau de revêtement (7) est chauffé et ainsi fondu et le matériau de revêtement fondu (7) est projeté sur la paroi de cylindre (13) du carter de vilebrequin (1) ou la chemise de cylindre (27).

5. Procédé selon la revendication 4, **caractérisé en ce que** le procédé de projection thermique est formé par projection de plasma atmosphérique (APS), le matériau de projection (7) étant acheminé sous forme de poudre vers une zone de chauffage (19) du dispositif de chauffage et de projection (17) à l'aide d'un dispositif d'acheminement (15), en particulier le matériau de projection étant injecté dans le jet de plasma d'un dispositif de chauffage et de projection conçu comme une torche à plasma.

6. Procédé selon la revendication 4, **caractérisé en ce que** le procédé de projection thermique est formé par projection à fil d'arc (LDS), le matériau de projection (7) étant acheminé sous forme de fil métallique vers une zone de chauffage (19) du dispositif de chauffage et de projection (17) à l'aide d'un dispositif d'acheminement.

7. Procédé selon l'une des revendications 3 à 6, **caractérisé en ce que**, après application du matériau de revêtement (7), une surface formée par le matériau de revêtement (7) est traitée à l'aide d'un dispositif de rodage comportant un outil de rodage, notamment une tête à rodoir.

8. Utilisation d'un alliage d'acier fortement allié, comprenant comme éléments d'alliage du chrome, du nickel, du cuivre et du niobium, comme matériau de revêtement (7) pour revêtir une surface de contact de cylindre d'un carter de vilebrequin (5) ou d'une chemise de cylindre (27), un alliage d'acier étant prévu qui est formé par l'acier 1.4542 (DIN EN 10088-3) ou par l'acier 1.4548 (DIN EN 10088-3).
